# EUROPEAN PATENT SPECIFICATION

(11) **EP 3 089 001 B1**
(45) Date of publication and mention of the grant of the patent: **04.03.2020**
(21) Application number: 15196595.1
(22) Date of filing: 26.11.2015
(51) Int. Cl.: G06F 3/041

(54) **SCREEN ASSEMBLY OF MOBILE DEVICE AND MOBILE DEVICE**
BILDSCHIRMANORDNUNG EINER MOBILEN VORRICHTUNG UND MOBILE VORRICHTUNG
ENSEMBLE ÉCRAN DE DISPOSITIF MOBILE ET DISPOSITIF MOBILE

(30) Priority: 28.04.2015 CN 201510209636
(43) Date of publication of application: 02.11.2016
(73) Proprietor: Xiaomi Inc., Beijing 100085 (CN)
(72) Inventor: LI, Guosheng, 100085 Haidian District (CN); LIU, Anyu, 100085 Haidian District (CN); ZHANG, Yu, 100085 Haidian District (CN)
(74) Representative: Loustalan, Paul William

(56) References cited:
- JP-A- 2009 031 666
- JP-A- 2009 193 096
- US-A1- 2005 134 751
- US-A1- 2009 179 880
- US-A1- 2009 237 381
- US-A1- 2010 164 921

## Description

### TECHNICAL FIELD

The present disclosure generally relates to the field of terminal technology, and more particularly, to a screen assembly of a mobile device and to a mobile device.

### BACKGROUND

In the related art, a mobile device is typically equipped with a light sensor, for sensing ambient light for the mobile device so as to suitably adjust brightness of the screen of the mobile device. This saves electric power for the device, and moreover, provides a suitable brightness for the user's sight.

Other display devices for mobile devices are also known which use optical sensors to detect the touch location of a user input. JP 2009 031666 A discloses a display device with an integrated touch panel. The touch panel comprises optical sensors, for detecting contact with the display screen, which are installed within pixels of the display screen. The display device is corrected such that the output of pixels having an optical sensor installed corresponds to the output of pixels without an optical sensor installed. A similar display device is disclosed in JP 2009 193096 A. This display enables correction of the optical touch sensors to account for environmental changes, and utilises threshold detectors to monitor the sensor level and determine the presence of an object on the sensor.

US 2009/0237381 A1, US 2009/0179880 A1 and US 2010/0164921 A1, disclose similar display devices with luminance control. The display devices use optical sensors provided within the effective pixel area of the display to adjust the luminance of the displayed image, and to detect user contact with the display.

### SUMMARY

The present disclosure provides a screen assembly of a mobile device and a mobile device, in order to overcome the defects in the related art.

According to a first aspect of embodiments of the present disclosure, there is provided a screen assembly of a mobile device so as to suitably adjust brightness of the screen of the mobile device, including:
a light sensor, disposed within a display region of the screen assembly and capable of acquiring data about ambient light for the mobile device;
a data transmission wire, connected to the light sensor at one end and a processing component in the mobile device at the other end, and capable of transmitting data acquired by the light sensor to the processing component; and
a touch screen structure, having a conductive layer which contains a plurality of electrodes arranged in accordance with a preset pattern;
wherein a vertical projection of the light sensor is located within a vertical projection of a gap among the plurality of electrodes.

As used herein, the term "vertical" refers to the direction normal to the plane comprising the screen of the mobile device.

Optionally, the light sensor is made of transparent material.

Optionally, the screen assembly further includes:
a glass panel and a LCD display module, wherein the touch screen structure is disposed between the glass panel and the LCD display module; and
the light sensor is disposed in the touch screen structure, or between the touch screen structure and the glass panel, or between the touch screen structure and the LCD display module.

Optionally, the screen assembly further includes:
a glass panel and a LCD display module, wherein the touch screen structure is embedded in the LCD display module; and
the light sensor is disposed in the touch screen structure.

Optionally, the screen assembly further includes:
a LCD display module,
wherein the vertical projection of the light sensor is located within a vertical projection of a BM region of a sub-pixel of the LCD display module.

As used herein, the term "BM" refers to a black matrix region of each sub-pixel of the display module.

Optionally, the screen assembly includes a plurality of light sensors and the light sensors are evenly arranged.

According to a second aspect of embodiments of the present disclosure, there is provided a mobile device, including the screen assembly of the mobile device according to any one of the above embodiments.

The advantageous effects brought by the technical solutions according to the embodiments of the present disclosure may include:
It can be seen from the above embodiments, in the present disclosure, the light sensor is provided within the screen assembly of the mobile device. Thereby, on one hand, no holes are required to be provided on the panel of the mobile device, and the strength and the aesthetic appearance of the panel can be maintained intact. On the other hand, the distance between the light sensor and the screen assembly can be eliminated, such that the light sensor can detect an ambient light condition more compliance with the actual condition of the screen assembly. Moreover, since there is no limitation to the size of the hole, the light sensor in the screen assembly can be implemented with a larger light collection angle, and the inaccuracy in light collection limited by the angle can be overcome.

The present invention is defined by the claims.

### BRIEF DESCRIPTION OF THE DRAWINGS

The accompanying drawings, which are incorporated herein and constitute a part of this specification, illustrate embodiments consistent with the invention and, together with the description, serve to explain the principles of the invention.
Fig. 1 is a schematic view of a screen assembly of a mobile device according to the related art.
Fig. 2 is a schematic view of a screen assembly of a mobile device according to an exemplary embodiment of the present disclosure.
Fig. 3 is a schematic view of another screen assembly of a mobile device according to an exemplary embodiment of the present disclosure.
Fig. 4 is a partial enlarged view of a touch screen structure of a screen assembly of a mobile device according to an exemplary embodiment of the present disclosure.
Fig. 5 is a partial enlarged view of a touch screen structure of another screen assembly of a mobile device according to an exemplary embodiment of the present disclosure.
Fig. 6 is a schematic view of layers of a screen assembly of a mobile device according to an exemplary embodiment of the present disclosure.
Fig. 7 is a schematic view of layers of another screen assembly of a mobile device according to an exemplary embodiment of the present disclosure.
Fig. 8 is a partial enlarged view of a color filter of a screen assembly of a mobile device according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same reference numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

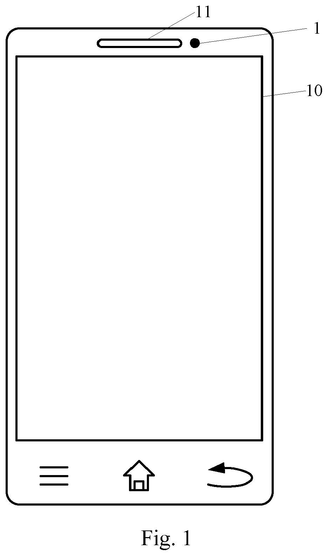

Fig. 1 is a schematic view of a screen assembly of a mobile device according to the related art. As shown in Fig. 1, in the related art, the screen assembly of the mobile device is provided with a hole (typically in a position as shown in Fig. 1, that is, on the upper side of the display region 10 of the screen assembly, for example, on two sides of the earphone 11). Then a light sensor 1 is mounted at the position corresponding to the hole. Thereby, the light sensor 1 can sense ambient lights of the mobile device through the hole.

However, the above solution of the related art has the following defects: 1. providing a hole on the screen assembly of the mobile device damages integrity of the mobile device and reduces strength of the screen assembly of the mobile device; 2. providing a hole on the screen assembly of the mobile device destroys aesthetic appearance of the mobile device; 3. the size of the hole is limited to reduce the influence of the hole while meeting the functional requirement of the light sensor 1, as a result, the light sensor 1 has a limited light incident angle in light detection, and thus the mobile device fails to adjust the brightness of the screen according to change of the ambient light, and accordingly, the user's experience is greatly influenced; and 4. the adjustment to the brightness of the screen is required to be performed directly with respect to the display region 10, while the light sensor 1 is disposed with a certain space to the display region 10, as a result, the light sensor 1 collects an ambient light condition different from the actual one at the display region 10, and accordingly, the effect of the adjustment to the brightness of the screen is influenced.

Accordingly, the present disclosure provides a structural improvement to the screen assembly of the mobile device, in order to solve the above technical defects of the related art.

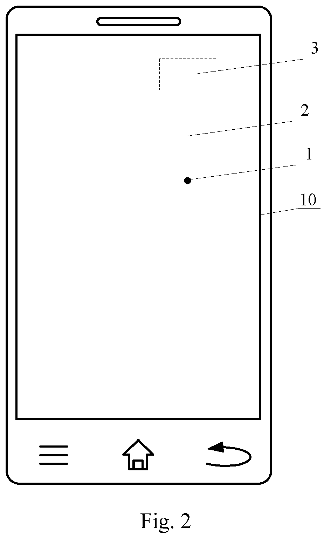

Fig. 2 is a schematic view of a screen assembly of a mobile device according to an exemplary embodiment of the present disclosure. As shown in Fig. 2, the screen assembly includes:
a light sensor 1, disposed within a display region 10 of the screen assembly and capable of acquiring data about ambient lights for the mobile device;
a data transmission wire 2, connected to the light sensor 1 at one end and a processing component 3 in the mobile device at the other end, and capable of transmitting data acquired by the light sensor 1 to the processing component 3.

In the present embodiment, the display region 10 refers to a region on the screen assembly for implementing the display function. For example, the display region 10 corresponds to a View Area (VA) region of a LCD display module of the screen assembly.

In the present embodiment, the light sensor 1 is provided within the display region 10 of the screen assembly of the mobile device such that the light sensor 1 can directly collect the ambient light at the display region 10 without any space between them. It can improve the accuracy of detection of the ambient light condition by the light sensor 1.

Moreover, since the display region 10 is a transparent structure, the light sensor 1 can directly collect ambient light for the mobile device without a hole provided on the panel of the mobile device. Thus, the strength and the aesthetic appearance of the screen assembly of the mobile device can be maintained intact.

In addition, since the light sensor 1 directly detects ambient light for the mobile device through the glass panel of the screen assembly at the display region 10, the collection of the light is not influenced by the size of the hole. Accordingly, the obstruction or limitation to the detection angle can be obviated, and the collected ambient light condition can be more compliant with the actual condition of the mobile device for the mobile device to adjust the brightness of the screen more accurately.

### 1. Number of the light sensors 1

In the technical solution of the present disclosure, the number of the light sensors 1 is not limited, and the screen assembly of the mobile device can be provided with the light sensors 1 of any number as desired.

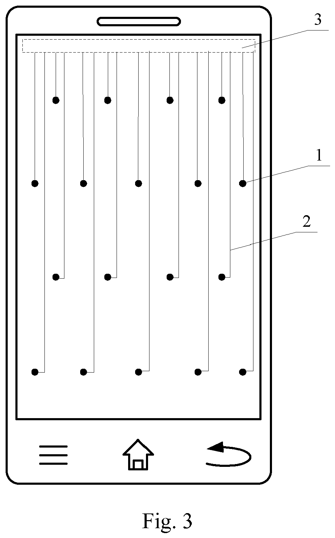

As an exemplary embodiment, the screen assembly of the mobile device can be provided with a plurality of light sensors 1. As shown in Fig. 3, the light sensors 1 can be evenly arranged within the display region 10, so as to more thoroughly and finely collect the ambient light for the mobile device. Wherein, each of the light sensors 1 is connected to the processing component 3 via a corresponding data transmission wire 2.

It should be noted that, in the present disclosure, the processing component 3 can be a single processing chip such as a Microcontroller Unit (MCU), or can also be a module consisting of a plurality of components performing processing function. This is not limited in the present disclosure.

### 2. Light sensor 1 and touch screen structure 4

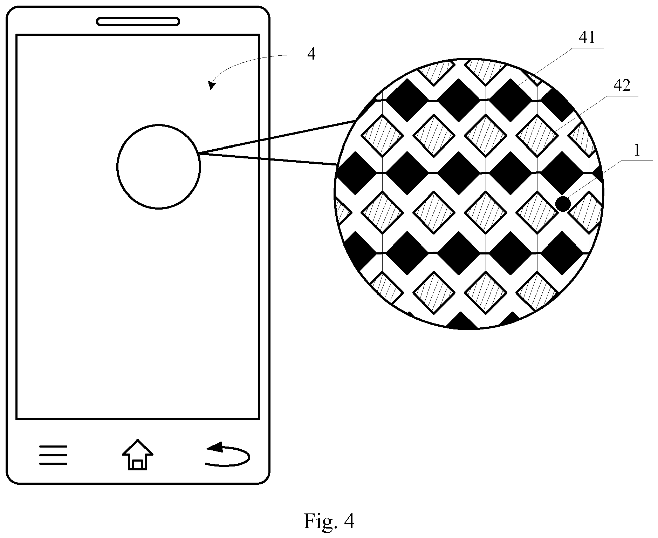

Fig. 4 is a partial enlarged view of a touch screen structure of a screen assembly of a mobile device according to an exemplary embodiment of the present disclosure. As shown in Fig. 4, the screen assembly can further include:
a touch screen structure 4, having a conductive layer which contains a plurality of electrodes arranged in accordance with a preset pattern. For example, in Fig. 4, a plurality of diamond-shaped electrodes arranged sequentially in a staggered manner. Specifically, one type of electrodes 41 (all-black ones as shown in Fig. 4) are arranged in rows and every two adjacent electrodes in the horizontal direction are connected to each other, and the other type of electrodes 42 (hatched ones as shown in Fig. 4) are arranged in columns and every two adjacent electrodes in the vertical direction are connected to each other.

Wherein, a vertical projection of the light sensor 1 is located within a vertical projection of a gap among some of the electrodes. In other words, the light sensor 1 is disposed in a gap among electrodes. However, the light sensor 1 can be at the same layer with the conductive layer, or can be at a different layer. In the present embodiment, it can prevent the light sensor 1 from influencing the operation of the conductive layer of the touch screen structure 4. Moreover, it is beneficial for separately manufacturing the conductive layer and the light sensor 1 during the production of the screen assembly.

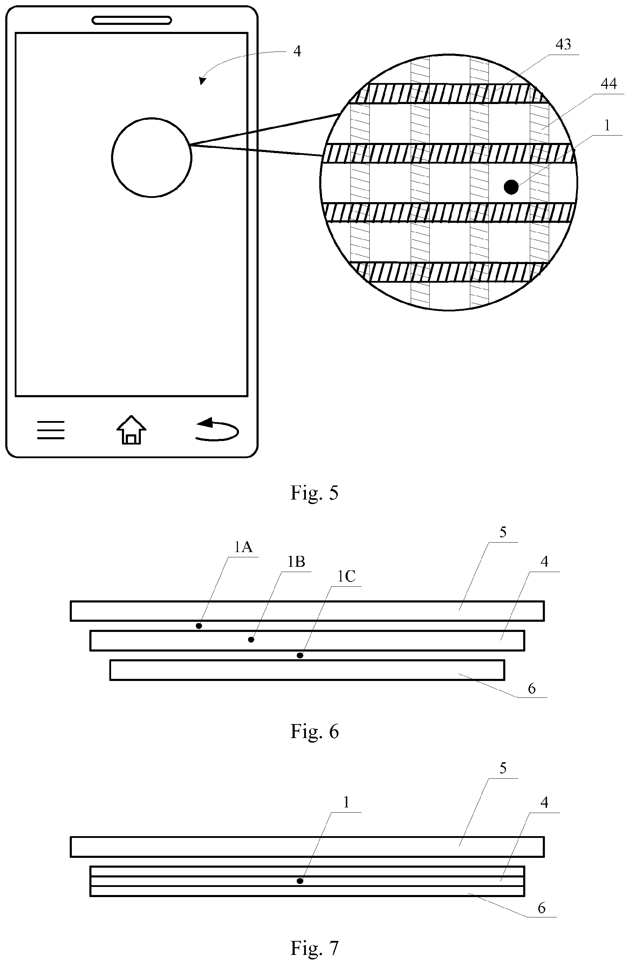

However, the diamond shape and arrangement of the electrodes as shown Fig. 4 is only one exemplary form of pattern. Those skilled in the art can design and adopt any other forms of pattern as desired, and they are all applicable to the technical solution of the present disclosure, as long as "a vertical projection of the light sensor 1 is located within a vertical projection of a gap among electrodes". For example, Fig. 5 shows another form of pattern containing strip-shaped horizontal electrodes 43 and vertical electrodes 44, and the light sensor 1 can disposed in a gap among some of the electrodes 43 and the electrodes 44.

### 3. Disposition position of light sensor 1

The related art provides various forms of screen assemblies with the light sensor 1 disposed at various positions. Hereinafter the technical solution of the present disclosure will be described with reference to examples of some possible arrangements and positions of the light sensor 1.

As an exemplary embodiment, as shown in Fig. 6, the screen assembly of the mobile device can be an "outer-hanging" structure in which the touch screen structure 4 is disposed between a glass panel 5 and a LCD display module 6. The "outer-hanging" structure can be types such as GG, GG2, OGS, G1F, GFF, GF2, GF and the like, and they are all applicable to the technical solution of the present disclosure. Accordingly, the light sensor 1 can be disposed as one the following.
1) A light sensor 1A, disposed between the touch screen structure 4 and the glass panel 5. For example, the light sensor 1A can be disposed at the surface of the touch screen structure 4 or behind the bottom surface of the glass panel 5, and then the touch screen structure 4 and the glass panel 5 are bonded to each other such that the light sensor 1A is located in the bonding layer therebetween.
2) A light sensor IB, disposed in the touch screen structure 4. It can eliminate the need to bond the touch screen structure 4 and the glass panel 5.
3) A light sensor 1C, disposed between the touch screen structure 4 and the LCD display module 6. For example, the light sensor 1C can be disposed at the bottom surface of the touch screen structure 4 or behind the surface of the LCD display module 6, and then the touch screen structure 4 and the LCD display module 6 are bonded to each other such that the light sensor 1C is located in the bonding layer therebetween.

As another exemplary embodiment, as shown in Fig. 7, the screen assembly of the mobile device can be an "embedded in" structure in which the touch screen structure 4 is embedded in the LCD display module 6. The "embedded in" structure can be types such as On-cell, In-cell and the like, and accordingly, the light sensor 1 can be disposed in the touchscreen structure 4.

### 4. Light sensor 1 and LCD display module 6

As an exemplary embodiment, the light sensor 1 can be made of transparent material, to avoid influence on the display of the LCD display module 6.

As another exemplary embodiment, the volume of the light sensor 1 can be reduced such that the light sensor 1 is unrecognizable to the user when he watches the mobile device with his naked eyes, to avoid influence on the display of the LCD display module 6.

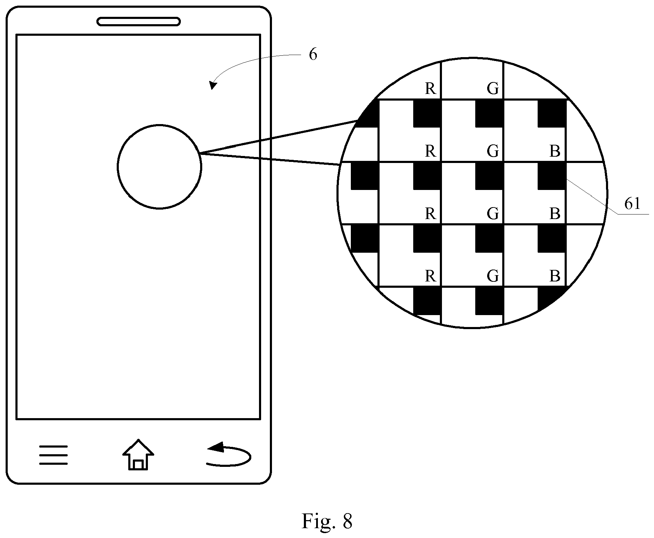

As a further exemplary embodiment, as shown in Fig. 8, a plurality of sub-pixels adjacent to each other (i.e. rectangles disposed adjacent to each other in an enlarged area of Fig. 8, in which a R sub-pixel corresponds to Red color, a G sub-pixel corresponds to Green color and a B sub-pixel corresponds to Blue color) are provided on the color filter (the partial enlarged area of Fig. 8 represents a partial region of the color filter, which is not marked with a number) of the LCD display module 6, and each sub-pixel contains a Black Matrix (BM) region 61 which is not for displaying colors of the corresponding sub-pixel. Accordingly, the vertical projection of the light sensor 1 can be located within a vertical projection of a BM region 61 of a sub-pixel of the LCD display module 6. Thereby, even if the light sensor 1 has a large volume or is not made of transparent material, it can avoid influence on the display of the LCD display module 6.

However, if the vertical projection of the light sensor 1 satisfies both of the following conditions: 1. located within a vertical projection of a gap among some of the electrodes of the conductive layer of the touch screen structure 4; and 2. located within a vertical projection of a BM region 61 of a sub-pixel of the LCD display module 6, it can avoid influence on both of the touch screen structure 4 and the LCD display module 6.

## Claims

1. A screen assembly of a mobile device, **characterized in that** the screen assembly comprises:
a light sensor (1), disposed within a display region (10) of the screen assembly and capable of acquiring data about ambient light for the mobile device so as to suitably adjust brightness of the screen of the mobile device;
a data transmission wire (2), connected to the light sensor (1) at one end and a processing component (3) in the mobile device at the other end, and capable of transmitting data acquired by the light sensor (1) to the processing component (3); and
a touch screen structure (4), **characterized in that** the touch screen structure (4) has a conductive layer which contains a plurality of electrodes arranged in accordance with a preset pattern; and
wherein a vertical projection of the light sensor (1) is located within a vertical projection of a gap among the plurality of electrodes.

2. The screen assembly according to claim 1, wherein the light sensor (1) is made of transparent material.

3. The screen assembly according to claim 1 or 2, wherein the screen assembly further comprises: a glass panel (5) and a LCD display module (6),
wherein the touch screen structure (4) is disposed between the glass panel (5) and the LCD display module (6); and
the light sensor (1) is disposed in the touch screen structure (4), or between the touch screen structure (4) and the glass panel (5), or between the touch screen structure (4) and the LCD display module (6).

4. The screen assembly according to claim 1 or 2, wherein, the screen assembly further comprises: a glass panel (5) and a LCD display module (6),
wherein the touch screen structure (4) is embedded in the LCD display module (6); and
the light sensor (1) is disposed in the touch screen structure (4).

5. The screen assembly according to any of the preceding claims, wherein, the screen assembly further comprises: a LCD display module (6),
wherein the vertical projection of the light sensor (1) is located within a vertical projection of a BM region (61) of a sub-pixel of the LCD display module (6).

6. The screen assembly according to any of the preceding claims, wherein, the screen assembly comprises a plurality of light sensors (1) and the light sensors (1) are evenly arranged.

7. A mobile device, **characterized in that** the mobile device comprises a screen assembly of the mobile device according to any one of claims 1 to 6.

## Patentansprüche

1. Bildschirmanordnung einer Mobilvorrichtung, **dadurch gekennzeichnet, dass** die Bildschirmanordnung Folgendes aufweist:
einen Lichtsensor (1), der in einer Anzeigeregion (10) der Bildschirmanordnung angeordnet ist und zum Erfassen von Daten über Umgebungslicht für die Mobilvorrichtung fähig ist, um die Helligkeit des Bildschirms der Mobilvorrichtung angemessen anzupassen;
einen Datenübertragungsdraht (2), der an einem Ende mit dem Lichtsensor (1) und am anderen Ende mit einer Verarbeitungskomponente (3) in der Mobilvorrichtung verbunden ist und zum Übertragen von vom Lichtsensor (1) erfassten Daten an die Verarbeitungskomponente (3) fähig ist; und
eine Touchscreen-Konstruktion (4), **dadurch gekennzeichnet, dass** die Touchscreen-Konstruktion (4) eine leitfähige Schicht hat, die eine Vielzahl von Elektroden enthält, die gemäß einem voreingestellten Muster angeordnet sind; und
wobei eine vertikale Projektion des Lichtsensors (1) sich in einer vertikalen Projektion eines Zwischenraums zwischen der Vielzahl von Elektroden befindet.

2. Bildschirmanordnung nach Anspruch 1, wobei der Lichtsensor (1) aus transparentem Material hergestellt ist.

3. Bildschirmanordnung nach Anspruch 1 oder 2, wobei die Bildschirmanordnung ferner Folgendes aufweist: eine Glastafel (5) und ein LCD-Anzeigemodul (6),
wobei die Touchscreen-Konstruktion (4) zwischen der Glastafel (5) und dem LCD-Anzeigemodul (6) angeordnet ist; und
der Lichtsensor (1) in der Touchscreen-Konstruktion (4) oder zwischen der Touchscreen-Konstruktion (4) und der Glastafel (5) oder zwischen der Touchscreen-Konstruktion (4) und dem LCD-Anzeigemodul (6) angeordnet ist.

4. Bildschirmanordnung nach Anspruch 1 oder 2, wobei die Bildschirmanordnung ferner Folgendes aufweist: eine Glastafel (5) und ein LCD-Anzeigemodul (6),
wobei die Touchscreen-Konstruktion (4) im LCD-Anzeigemodul (6) eingebettet ist; und
der Lichtsensor (1) in der Touchscreen-Konstruktion (4) angeordnet ist.

5. Bildschirmanordnung nach einem der vorhergehenden Ansprüche, wobei die Bildschirmanordnung ferner Folgendes aufweist: ein LCD-Anzeigemodul (6),
wobei die vertikale Projektion des Lichtsensors (1) sich innerhalb einer vertikalen Projektion einer BM-Region (61) eines Subpixels des LCD-Anzeigemoduls (6) befindet.

6. Bildschirmanordnung nach einem der vorhergehenden Ansprüche, wobei die Bildschirmanordnung eine Vielzahl von Lichtsensoren (1) aufweist und die Lichtsensoren (1) gleichmäßig angeordnet sind.

7. Mobilvorrichtung, **dadurch gekennzeichnet, dass** die Mobilvorrichtung eine Bildschirmanordnung der Mobilvorrichtung nach einem der Ansprüche 1 bis 6 aufweist.

## Revendications

1. Ensemble d'écran d'un dispositif mobile, **caractérisé en ce que** l'ensemble d'écran comprend :
un photodétecteur (1), disposé dans une région d'affichage (10) de l'ensemble d'écran et capable d'acquérir des données concernant la lumière ambiante pour le dispositif mobile de manière à régler comme il convient la luminosité de l'écran du dispositif mobile ;
un fil de transmission de données (2), connecté au photodétecteur (1) à une extrémité et à un composant de traitement (3) dans le dispositif mobile à l'autre extrémité, et capable de transmettre des données acquises par le photodétecteur (1) au composant de traitement (3) ; et
une structure d'écran tactile (4), **caractérisée en ce que** la structure d'écran tactile (4) a une couche conductrice qui contient une pluralité d'électrodes arrangées selon une configuration préréglée ; et
dans lequel une projection verticale du photodétecteur (1) est située dans une projection verticale d'un vide parmi la pluralité d'électrodes.

2. Ensemble d'écran selon la revendication 1, dans lequel le photodétecteur (1) est fabriqué en un matériau transparent.

3. Ensemble d'écran selon la revendication 1 ou 2, où l'ensemble d'écran comprend en outre : un panneau de verre (5) et un module d'affichage LCD (6),
dans lequel la structure d'écran tactile (4) est disposée entre le panneau de verre (5) et le module d'affichage LCD (6) ; et
le photodétecteur (1) est disposé dans la structure d'écran tactile (4), ou bien entre la structure d'écran tactile (4) et le panneau de verre (5), ou bien entre la structure d'écran tactile (4) et le module d'affichage LCD (6).

4. Ensemble d'écran selon la revendication 1 ou 2, où l'ensemble d'écran comprend en outre : un panneau de verre (5) et un module d'affichage LCD (6),
dans lequel la structure d'écran tactile (4) est incorporée dans le module d'affichage LCD (6) ; et
le photodétecteur (1) est disposé dans la structure d'écran tactile (4).

5. Ensemble d'écran selon l'une quelconque des revendications précédentes, où l'ensemble d'écran comprend en outre: un module d'affichage LCD (6),
dans lequel la projection verticale du photodétecteur (1) est située dans une projection verticale d'une région BM (61) d'un sous-pixel du module d'affichage LCD (6).

6. Ensemble d'écran selon l'une quelconque des revendications précédentes, où l'ensemble d'écran comprend une pluralité de photodétecteurs (1) et les photodétecteurs (1) sont arrangés de manière régulière.

7. Dispositif mobile, **caractérisé en ce que** le dispositif mobile comprend un ensemble d'écran du dispositif mobile selon l'une quelconque des revendications 1 à 6.
